# EUROPEAN PATENT APPLICATION

(11) **EP 2 159 562 A2**
(43) Date of publication of application: **03.03.2010**
(21) Application number: 09168378.9
(22) Date of filing: 21.08.2009
(51) Int. Cl.: G01N 1/00

(54) **Embedding cassette printing apparatus**

(30) Priority: 29.08.2008 JP 2008222689
(71) Applicant: Seiko Instruments Inc., Chiba-shi, Chiba (JP)
(72) Inventor: Fujimoto, Koji, Chiba-shi, Chiba (JP); Kawaji, Toshiki, Chiba-shi, Chiba (JP)
(74) Representative: Cloughley, Peter Andrew

(57) **Abstract**

The invention is intended to achieve high-precision quality control by alleviating a burden of personnel by improving the operation efficiency and preventing erroneous storage of embedding cassettes in a container. A control unit controls a cassette carrying unit so as to take out a cassette of a predetermined kind from a cassette storage in a predetermined order and carry the same to a cassette printing unit, and carry a cassette on which data is printed to a base container set in a container holding unit.

## Description

The present invention relates to an embedding cassette printing apparatus.

In the related art, a microtome is publicly known as an apparatus for preparing a thin section sample used in a clinical laboratory examination or a preclinical laboratory examination. The thin section sample is a sample in which a thin section of several µm (for example, 3µm to 5µm) in thickness is fixed on a substrate such as an object glass or the like. The thin section is prepared by cutting an embedded block formed by embedding a biological sample with an embedding material into very thin pieces in thicknesses as described above. The embedded block is a block-like substance prepared by performing a paraffin substitution process on a biological sample taken out from a human body, a test animal, and the like and then formalin-fixed, and solidifying the periphery thereof with paraffin. In the preparation of the embedded block, an embedding cassette, which is a specific container therefor, is generally used.

The embedding cassette is formed of material having xylene resisting properties, alcohol resisting properties, acid resisting properties, and formalin resisting properties and includes a receiving portion in which the embedded block is fixed. A bottom surface of the receiving portion is formed into a mesh form. In other words, the embedding cassette is configured to allow communication between the front side and the back side via the bottom surface of the receiving portion.

Here, in order to achieve an accurate quality control of the embedded block fixed to the embedding cassette, an embedding cassette printing apparatus configured to print an identification code for recognizing the kind or the like of the biological sample embedded in the embedded block on the embedding cassette is used (for example, see histological testing apparatus: Printing, Sakura Finetek Japan Co,. Ltd., July 24th, 2008, URL:http://www.sakura-finetek.com/product/category/kiki/inji e.html). This embedding cassette printing apparatus includes a holder in which embedding cassettes before printing are held and a printing unit configured to print data on the embedding cassettes continuously carried from the holder, the printing unit being configured to print data on printing surfaces of the embedding cassettes by a contact printing process such as thermal transfer process or dot impact process.

In a preclinical test or the like using the embedded block, embedded blocks cut along various sections of the entire part of a main internal organ of an animal or the like as a test object are necessary, and the number of test pieces is generally increased for statistical work of the test results. Therefore, the number of the required embedded blocks and the embedding cassettes in which the embedded blocks are fixed easily reaches several hundred pieces. Also, the number of embedding cassettes subjected to the printing operation by the embedding cassette printing apparatus at a time increases, and the quantity of data to be printed on the printing surface of the embedding cassette increases as well.

However, in the embedding cassette printing apparatus described above, generally, since the embedding cassettes with data printed thereon are simply discharged from a discharge port, it is necessary to sort out these embedding cassettes manually by kind of test animal, by internal organ, or by test and store the same in the container or the like of the embedding cassettes after having discharged. In this case, in the embedding cassette printing apparatus as described above, since printing of various data on a large number of (for example, several hundred pieces) embedding cassettes at a time is needed, if personnel have to sort out the embedding cassettes one by one by identifying the printed identification codes, the operating efficiency is not good, and the personnel have to be in charge of a heavy burden.

In addition, there is a risk of erroneous sorting when storing the embedding cassettes on which the data is printed in the container.

In view of such circumstances, it is an object of the invention to provide an embedding cassette printing apparatus which achieves high-precision quality control by alleviating a burden on personnel by improving the operation efficiency and preventing erroneous storage of embedding cassettes in a container.

In order to solve the above-described problem, the invention provides the following means.

An embedding cassette printing apparatus according to the invention is an embedding cassette printing apparatus configured to print an identification code of biological sample on a printing surface of an embedding cassette used as a placing bed for an embedded block formed by embedding the biological sample applied with paraffin substitution process in an embedding material including: a cassette storage unit configured to store a plurality of the embedding cassettes by kind; a cassette printing unit configured to print data on the printing surfaces of the embedding cassettes; a container holding unit configured to set a container configured to receive the embedding cassettes on which the data is printed; a cassette carrying unit configured to carry the embedding cassettes from the embedding cassette storage to the cassette printing unit and from the cassette printing unit to the container set in the container holding unit; and a control unit configured to control an action of the cassette carrying unit, in which the control unit takes out the embedding cassettes of a predetermined kind from the cassette storage in a predetermined order and carries the same to the cassette printing unit, and controls the cassette carrying unit so as to carry the embedding cassettes on which the data is printed to the container set in the container holding unit.

In this configuration, the cassette carrying unit takes out the embedding cassettes of the predetermined kind on the basis of the signal outputted from the control unit in the predetermined order, carries the same to the cassette printing unit, and prints the data in sequence on the carried embedding cassettes. Subsequently, the embedding cassettes on which the data is printed are arranged in sequence in the container set in the container holding unit, so that the embedding cassettes arranged in the container are arranged automatically in a state of being sorted by predetermined test animal, by internal organ, or by test. In other words, after having printed the data automatically by the predetermined classification according to the correspondence between the kind of the embedding cassette and the identification code on the basis of information inputted into the control unit in advance, the embedding cassettes on which the data is printed is stored in the container as is. Therefore, being different from the configuration in which the embedding cassettes on which the data is printed are simply discharged from the discharge port one by one as in the related art, it is not necessary to arrange the embedding cassettes on which the data is printed manually.

Accordingly, the operation efficiency is significantly improved and the burden on the personnel is alleviated in comparison with the case in which the personnel identify the identification codes printed on the embedding cassettes and sort the embedding cassette as in the related art. In addition, there is no risk of erroneous sorting when arranging the embedding cassettes on which the data is printed in the container.

Therefore, since packing of the embedding cassettes in a state of being sorted in the container by a predetermined classification is achieved, the procedure may go to the following embedded block preparation process or the like smoothly and the accurate quality control of the embedded block to be fixed to the embedding cassette is achieved.

Preferably, the embedding cassette printing apparatus according to the invention includes a container stock unit configured to stock the containers to be set in the container holding unit, a container storage configured to store the container in which the embedding cassettes on which the data is printed are received, and a container carrying unit configured to carry the container stocked in the container stock unit to the container holding unit and carry the container in which the embedding cassettes are stored to the container storage.

In this configuration, the container is automatically supplied and carried since the container carrying unit supplies the container from the container stock unit to the container holding unit, and also the container is carried from the container holding unit to the container storage after having completed the storage of the embedding cassettes to the container. Accordingly, the operation efficiency is further improved, and the burden on the personnel is alleviated.

Preferably, the cassette printing unit according to the invention includes a laser marker apparatus, and prints the data on the printing surface of the embedding cassette by a laser beam irradiated from the laser marker apparatus.

In this configuration, since the identification code is engraved by graving the printing surface using the laser beam, being different from a contact printing process in the related art, the separation of the identification code during the operation to prepare the embedded block due to the friction or the like is avoided. Therefore, the quality control of the embedded block is performed always accurately.

Since the identification code is printed using the laser beam, the printing speed is high, and hence the printing operation is achieved in a short time. Therefore, improvement of the operating efficiency is achieved. Since the identification code is engraved in a non-contact operation, the display of the identification code is achieved without being affected by the coarseness of the surface of the printing surface. In addition, even though the printing surface does not match precisely with the print head surface of the laser marker, the printing failure does not occur. Therefore, a film is formed on the printing surface without paying specific attention.

Preferably, a cassette pack in which the embedding cassettes before the data is printed thereon are arranged by kind by a predetermined number is inserted into the cassette storage, grooves are formed on surfaces of the cassette pack along the direction of insertion into the cassette storage, while rails configured to engage the grooves for guiding the cassette pack into the cassette storage are formed on the cassette storage, and the grooves are formed from one end of the cassette pack to a midsection along the direction of insertion of the cassette storage.

In this configuration, since the grooves formed on the cassette pack are formed only from one end of the surface along the direction of insertion to the cassette storage of the cassette pack to the midsection, if an attempt is made to insert the cassette pack from the other end side, the end surface on the other end side of the cassette pack and the end surface of the rails of the cassette storage come into contact with each other, so that the cassette pack cannot be inserted. Accordingly, erroneous insertion of the cassette pack is prevented, and the cassettes are taken out in a normal orientation by the cassette carrying unit, whereby the correct printing of data on the cassette is achieved.

Preferably, the cassette storage is inclined downward from the inlet side where the cassette pack is inserted to the outlet side where the embedding cassettes are taken out by the cassette carrying unit.

In this configuration, since the cassette storage is inclined downward from the inlet side to the outlet side, if the embedding cassette is taken out from the outlet side, the embedding cassettes arranged on the back side of the embedding cassette taken out are automatically slid downward by a gravitational force. Therefore, since it is not necessary to provide separately, for example, a mechanism to supply the embedding cassette on the back side toward the outlet side in sequence every time when the embedding cassette on the front side is taken out, the manufacturing cost of the apparatus is reduced.

Preferably, the embedding cassettes are arranged in the cassette pack in a state of being aligned along the direction of insertion thereof into the cassette storage, and a projection for reducing the contact surface area with the adjacent embedding cassette is formed on the back surface side of the each embedding cassette.

In this configuration, since the rails are formed on the back surface sides of the embedding cassettes, the embedding cassettes arranged in the cassette pack are arranged in a state of being in contact with each other via the rails. In other words, the embedding cassettes adjacent to each other in the cassette pack are in the state of line contact with each other, and the contact surface area is reduced in comparison with the configuration in which the adjacent embedding cassettes are in surface contact with each other over the entire front and rear surfaces. Accordingly, a frictional force between the adjacent embedding cassettes is smaller than the case where the embedding cassettes are in surface contact with each other, the embedding cassette is prevented from jumping out from the cassette pack by being dragged by the adjacent cassette when the embedding cassette is taken out, so that only the predetermined single cassette is pulled out.

According to the embedding cassette printing apparatus in the invention, the cassette carrying unit takes out the embedding cassettes of the predetermined kind on the basis of the signal outputted from the control unit in the predetermined order, carries the same to the cassette printing unit, and prints the data in sequence on the carried embedding cassettes. Subsequently, the embedding cassettes on which the data is printed are arranged in sequence in the container set in the container holding unit, so that the embedding cassettes arranged in the container are arranged automatically in a state of being sorted by predetermined test animal, by internal organ, or by test. In other words, after having printed the data automatically by the predetermined classification according to the correspondence between the kind of the embedding cassette and the identification code on the basis of information inputted into the control unit in advance, the embedding cassettes on which the data is printed is stored in the container as is. Therefore, being different from the configuration in which the embedding cassettes on which the data is printed are simply discharged from the discharge port one by one as in the related art, it is not necessary to arrange the embedding cassettes on which the data is printed manually.

Accordingly, the operation efficiency is significantly improved and the burden on the personnel is alleviated in comparison with the case in which the personnel identify the identification codes printed on the embedding cassettes and sort the embedding cassette as in the related art. In addition, there is no risk of erroneous sorting when arranging the embedding cassettes on which the data is printed in the container.

Therefore, since packing of the embedding cassettes in a state of being sorted in the container by a predetermined classification is achieved, the procedure may go to the following embedded block preparation process or the like smoothly and the accurate quality control of the embedded block to be fixed to the embedding cassette is achieved.

Embodiments of the present invention will now be described by way of further example only and with reference to the accompanying drawings, in which:
Fig. 1 is a front perspective view of a cassette in an embodiment of the invention;
Fig. 2 is a front view (back view) of the cassette in the embodiment of the invention;
Fig. 3 is a side view of the cassette in the embodiment of the invention;
Fig. 4 is a side view showing the cassette on which an embedded block in the embodiment of the invention is fixed;
Fig. 5 is a block diagram of a printing apparatus unit in the embodiment of the invention;
Fig. 6 is a schematic configuration drawing (side view) of the printing apparatus according to the embodiment of the invention;
Fig. 7 is a schematic configuration drawing (side view) of a cassette pack according to the embodiment of the invention;
Fig. 8 is a schematic configuration drawing (side view) of a storage rack according to the embodiment of the invention;
Fig. 9 is a schematic configuration drawing (side view) of the storage rack at the time when a cassette pack is set according to the embodiment of the invention;
Fig. 10 is a schematic configuration drawing (back view) of the storage rack at the time when a cassette pack is set according to the embodiment of the invention;
Fig. 11 is a schematic configuration drawing (side view) of the cassette pack and the storage rack and is an explanatory drawing showing a method of setting the cassette pack according to the embodiment of the invention; and
Fig. 12 is an enlarged drawing of the storage rack and is an explanatory drawing showing the time of taking out the cassette according to the embodiment of the invention.

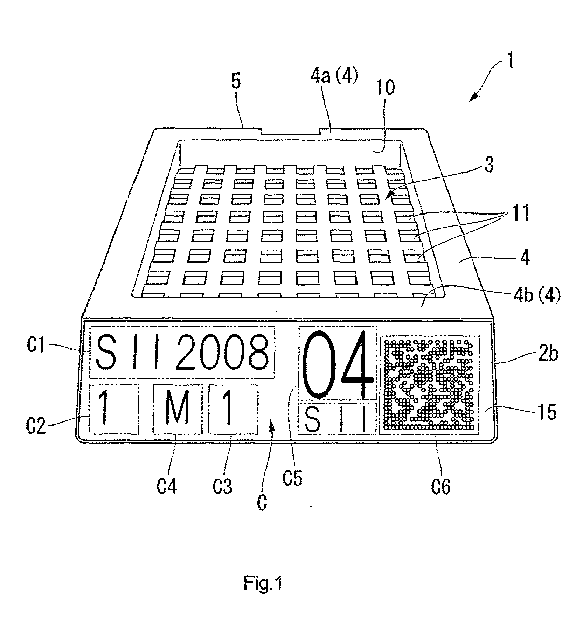

Referring now to Fig. 1 to Fig. 12, an embodiment of the invention will be described.

### (Embedding Cassette)

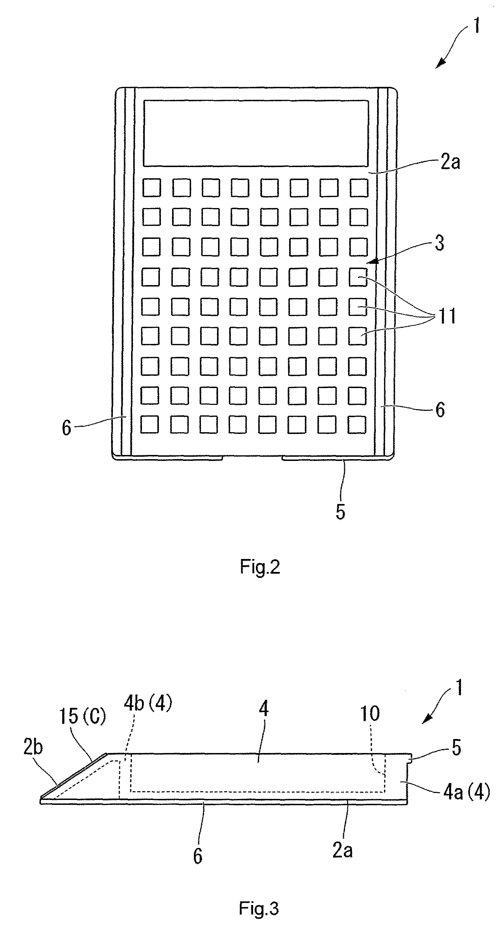

First of all, an embedding cassette (hereinafter, referred to as "cassette") on which data is printed by an embedding cassette printing apparatus described later (hereinafter, referred to as "printing apparatus") will be described. Fig. 1 is a front perspective view of the cassette; Fig. 2 is a plan view (back view) of the cassette; and Fig. 3 is a side view of the cassette.

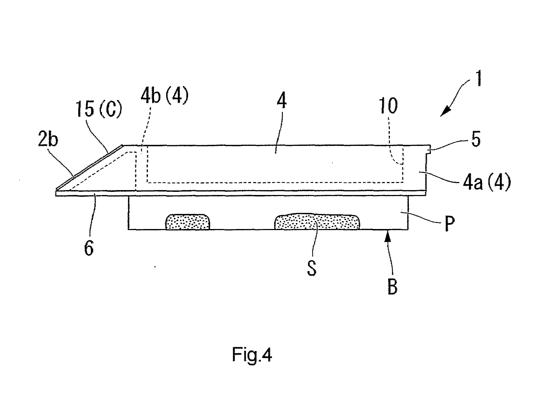

As shown in Figs. 1 to 3, a cassette 1 is used as a placing bed for an embedded block B (see Fig. 4) when preparing the embedded block B formed by embedding a biological sample S applied with paraffin substitution process in a paraffin (embedding material) P.

The cassette 1 is formed of polyacetal or fluorine contained resin superior in xylene resisting properties and alcohol resisting properties, and is formed with a recess 10 at the center thereof. The cassette 1 is formed into a rectangular shape in top view and an upper surface side corresponds to an opening of the recess 10. The cassette 1 is formed with a mesh portion 3 at the center of a bottom surface 2a thereof. The mesh portion 3 is formed by forming a plurality of through holes 11 penetrated through the bottom surface 2a in the thickness direction arranged in an array pattern, so that the bottom surface 2a side and the upper surface side of the recess 10 communicate with each other via the through holes 11. From among side walls 4 which surround the recess 10, a side wall 4a on one end side in terms of the longitudinal direction (far side in Fig. 1) is formed with a projecting portion 5 extending from an upper end edge toward the rear.

In contrast, from among the side walls 4 which surrounds the recess 10, a side wall 4b on one end side in terms of the longitudinal direction (near side in Fig. 1) is formed with an inclined surface 2b extending from the upper end edge toward the front in a state of inclining downward. The inclined surface 2b is inclined with respect to the bottom surface 2a of the cassette 1 at a predetermined angle and the lower end edge thereof is flush with the bottom surface 2a.

Provided over an entire surface of the inclined surface 2b described above is a thin film layer 15. The thin film layer 15 in this embodiment is formed of resin such as urethane resin having the xylene resisting properties and the alcohol resisting properties like the cassette 1, being easy to be formed into a thin film, and being relatively superior in adhesiveness with resin. In this case, the thin film layer 15 is adjusted in thickness so as to fall within a range from 5µm to 500µm inclusive. The thin film layer 15 is adapted to display an identification code C by being decomposed along a laser beam irradiated from a laser marker apparatus in a printing apparatus, described later. This will be described in detail later. The thin film layer 15 has a color being different at least in lightness from the color of the cassette 1.

Here, the bottom surface 2a of the cassette 1 is formed with a pair of rails (projections) 6 projecting along the thickness direction thereof. The rails 6 are formed in parallel along the entire length of the cassette 1 in the longitudinal direction on both lateral sides of the cassette 1 in terms of the widthwise direction, and are formed so as to embrace the both lateral sides of the mesh portion 3. Therefore, when the cassette 1 is placed on a placing bed (a desk, for example), the cassette 1 is placed thereon in a state in which lower surfaces of the rails 6 and upper surface of the placing bed are in abutment with each other, that is, in a state of securing a space between the bottom surface 2a and the upper surface of the placing bed.

As described above, the identification code C for recognizing the kind or the like of the biological sample S embedded in the embedded block B is printed on the thin film layer 15 formed on the inclined surface 2b by a laser marker in a printing apparatus 20, described later. The identification code C includes, for example, a test number C1 for identifying a predetermined preclinical test or the like, a group number C2 for identifying a test group, an animal number C3 for identifying the biological sample S as the test sample, a gender code C4 for identifying the gender of the biological sample S, a block number C5 for identifying the kind of the internal organ of the biological sample S. Then, the personnel are able to identify information immediately on the embedded block B fixed on the predetermined cassette 1 (test number, group number, animal number, gender, block number, etc.) by confirming the identification code C. Also, a reading section C6 which is formed by converting the above-described information on the embedded block B into two-dimensional barcode is formed on the thin film layer 15, so that the above-described information on the embedded block B is read out by reading the same by a barcode reader, not shown. The identification code C is not limited to the patterns as described above, and change of the number, the pattern of the code, and the layout is possible as needed.

Subsequently, a case of preparing the embedded block using the above-described cassette will be described. Fig. 4 is a side view showing the cassette on which the embedded block is fixed.

First of all, the personnel prepare a formalin-fixed biological sample, cut the biological sample into an adequate size, and then perform paraffin substitution process of the biometric sample. More specifically, the biological sample is immersed in a pallet filled with alcohol as a conditioner, and water content and fat are substituted by alcohol, that is, dehydrating process and degreasing process are performed. Subsequently, the conditioner in the palette is replaced by xylene. Accordingly, the alcohol that is substituted precedently is substituted by xylene. Then, finally, the conditioner in the palette is replaced by liquid-state paraffin, and the xylene substituted precedently is substituted by paraffin. Accordingly, a biological sample in which the water content and the fat are applied with paraffin substitution process is prepared.

After having completed the paraffin substitution process, an embedding dish filled with liquid-state paraffin is prepared. Then, the biological sample S is taken out from the palette used for the paraffin substitution, and the taken out biological sample S is placed in the embedding dish to immerse the same in the paraffin. Then, the cassette 1 on which the identification code C corresponding to the immersed biological sample S is printed is prepared, and the biological sample S is fixed to the cassette 1 together with the paraffin. More specifically, the cassette 1 is placed so as to cover the embedding dish with the bottom surface 2a of the cassette 1. In this case, the amount of the paraffin in the embedding dish is adjusted so that the paraffin enters the recess 10 through the through holes 11 of the cassette 1. In this state, the embedding dish is cooled and the paraffin is cooled and solidified.

Accordingly, the embedded block B having the biological sample S embedded in a paraffin P as shown in Fig. 4 is prepared. At this time, the embedded block B is in a state of being adhered and connected to the bottom surface 2a of the cassette 1. Then, finally, the cassette 1 having the embedded block B connected to the bottom surface 2a thereof is disconnected from the embedding dish and turned over. Consequently, the embedded block B fixed on the bottom surface 2a of the cassette 1 is obtained. Then, the personnel are able to identify the information on the embedded block B fixed to the cassette 1 immediately by confirming the identification code C printed on the cassette 1.

### (Printing Apparatus Unit)

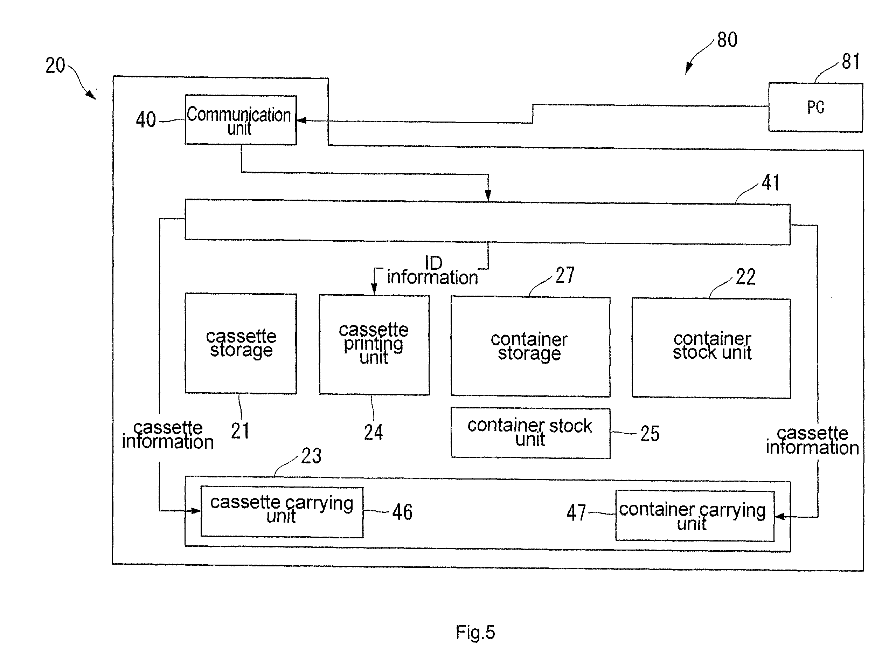

Subsequently, a printing unit configured to print the identification code on the thin film layer of the cassette as described above will be described. Fig. 5 is a block diagram showing the printing apparatus unit.

As shown in Fig. 5, a printing apparatus unit 80 includes the printing apparatus 20 and a control PC 81 connected to the printing apparatus 20 and configured to control the printing apparatus 20.

### (Printing Apparatus)

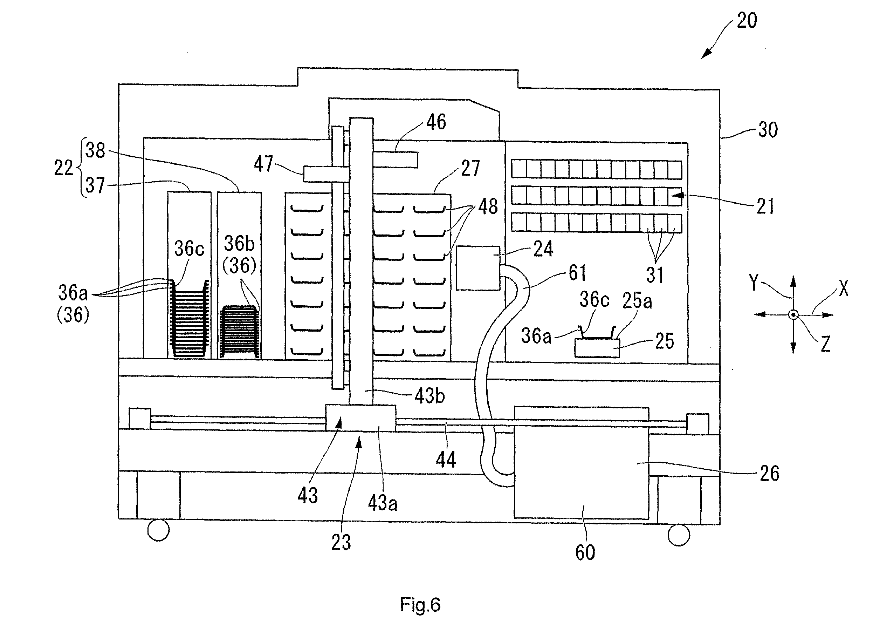

Fig. 6 is a schematic configuration drawing (side view) of the printing apparatus.

As shown in Fig. 6, the printing apparatus 20 includes a cassette storage 21, a container stock unit 22, a carrying unit 23, a cassette printing unit 24, a container holding unit 25, a dust catcher 26, and a container storage 27 mounted in a casing 30. The printing apparatus 20 also includes a control unit 41 and a communication unit 40 (see Fig. 5) described later.

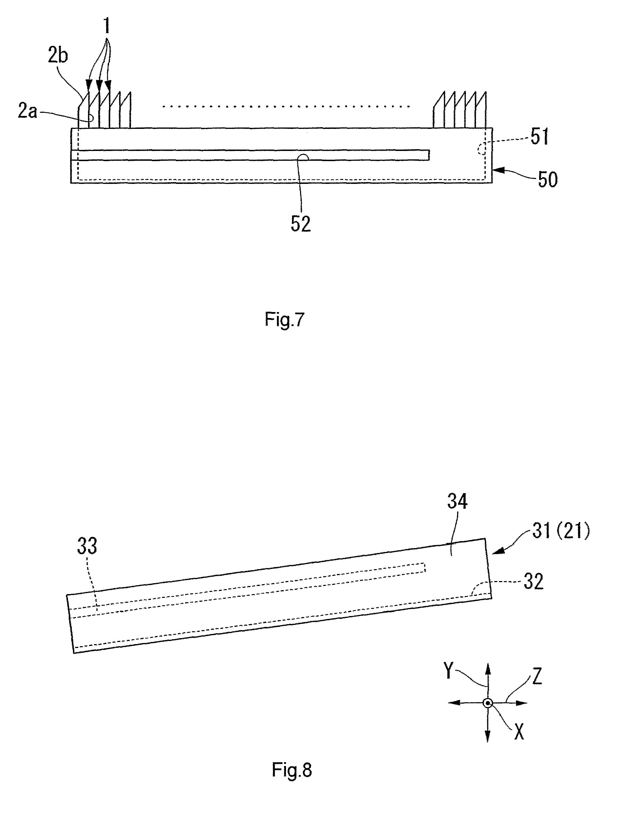

The cassette storage 21 is configured to store and hold cassette packs 50 (see Fig. 7) having a predetermined number of the cassettes 1 packed therein by kind, and includes a plurality of storage racks 31 in which the plurality of kinds of the cassette pack 50 are stored respectively.

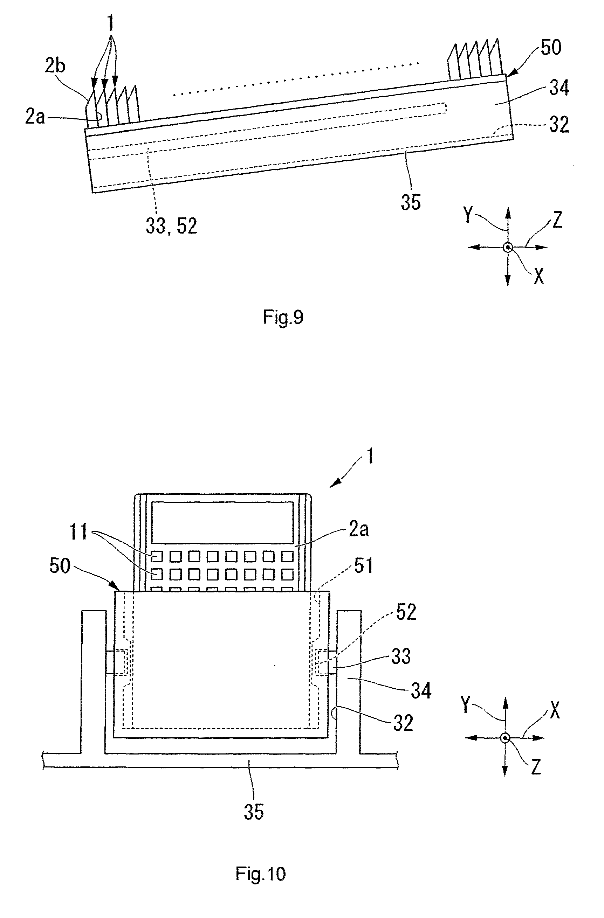

Fig. 7 is a schematic configuration drawing (side view) of the cassette pack; Fig. 8 is a schematic configuration drawing (side view) of a storage rack; Fig. 9 is a schematic configuration drawing (side view) of the storage rack when the cassette packs are set; and Fig. 10 is a back view.

As shown in Figs. 7, 9, and 10, the cassettes 1 as described above are packed by kind in the cassette pack 50 formed of a plastic or the like by a predetermined number. More specifically, in the cassette pack 50, the cassettes 1 being different in color, size thereof, or coarseness of the mesh portion 3 are packed in as state of being assorted by kind, respectively.

The cassette pack 50 is a box-shaped member having an opening on top, and is formed with a receiving portion 51 configured to receive the cassette 1 in the inside thereof. A plurality of the cassettes 1 are received in the interior of the receiving portion 51 in a state in which the widthwise direction of the receiving portion 51 matches the widthwise direction of the cassettes 1 and the longitudinal direction of the receiving portion 51 matches the thickness direction of the cassettes 1. In other words, the cassettes 1 are arranged vertically in a state in which the inclined surfaces 2b thereof are directed upward and the bottom surfaces 2a are aligned with the upper surfaces of the adjacent cassettes 1. Therefore, adjacent cassettes 1 are aligned with each other with the intermediary of the rails 6 formed on the bottom surfaces 2a, and are stored in a state of being in line contact with each other.

Here, grooves 52 depressed inwardly of the cassette pack 50 (in the receiving portion 51) are formed on both side surfaces of the cassette pack 50 in terms of the widthwise direction. The grooves 52 are guided by rails 33, described later, of the storage rack 31, and formed from an end surface of one end side (left side in Fig. 7) in the longitudinal direction (direction of insertion) of the cassette pack 50 toward the other end side (right side in Fig. 7) to a midsection of the cassette pack 50. In other words, the grooves 52 are opened on the end surface of the one end side of the cassette pack 50 in terms of the longitudinal direction, and are not formed on an end surface on the other end side.

As shown in Fig. 8 to 10, the storage racks 31 are configured to store and hold the cassette packs 50 as described above, and a plurality of cassette packs 50 are arranged in a plurality of rows along the widthwise direction (X-direction) and the height direction (Y-direction) of the casing 30 at an upper portion of one end side of the widthwise direction (X-direction) of the casing 30. The storage rack 31 has a C-shape in front view extending in the depth direction (Z-direction) of the casing 30 and includes a lower wall 35 and a pair of side walls 34 extending upright from the lower wall 35, whereby a recess 32 configured to hold the cassette packs 50 is formed by the lower wall 35 and the pair of side walls 34. In other words, by storing and holding the plurality of cassette packs 50 in which the cassettes 1 are received by kind in the recesses 32 of the storage racks 31, the predetermined cassettes 1 can be selectively taken out.

One end side (left side in Fig. 8) of the storage rack 31 in the longitudinal direction (Z-direction) constitutes an outlet port from which the cassettes 1 received in the cassette pack 50 are taken out, and the other end side thereof constitutes an inlet port from which the cassette pack 50 is inserted. In other words, the cassette pack 50 is set in the storage rack 31 by being inserted from the inlet port side of the storage rack 31 toward the outlet port side thereof. The storage rack 31 is inclined downward from the other end side toward the one end side, so that when the cassette 1 is taken out from the outlet port side, the cassettes 1 received in the cassette pack 50 slide along the thickness direction thereof by the gravitational force. Therefore, since it is not necessary to provide separately, for example, a mechanism to supply the cassette 1 on the back side toward the outlet port in sequence every time when the cassette 1 on the front side is taken out, the manufacturing cost of the apparatus is reduced.

The pair of side walls 34 which constitute the recess 32 of the storage rack 31 are formed with the rails 33 projecting inwardly (toward the opposed side wall 34) of the recess 32. The rails 33 are members configured to be engaged with the grooves 52 of the cassette pack 50 described above for guiding the cassette pack 50 in the recess 32, and are formed from the end of the storage rack 31 on the inlet port side toward the midsection of the side walls 34 in terms of the longitudinal direction thereof.

Referring back to Fig. 6, the container stock unit 22 is a member configured to stock empty containers 36 for packing the cassettes 1 on which the identification codes C are printed, and includes a base stock unit 37 and a cover stock unit 38 arranged on the lower side on the other end side in the casing 30 in terms of the widthwise direction (X-direction). The container 36 in this embodiment includes separate members; a base container 36a having a receiving recess 36c configured to receive the cassettes 1 on which the data is printed, and a cover container 36b formed so as to close the receiving recess 36c of the base container 36a.

The base stock unit 37 is a member configured to stock the base containers 36a of the containers 36 and a plurality of the base containers 36a are stacked upward in a state the respective receiving recesses 36c are stacked one on top of another.

The cover stock unit 38 is arranged adjacently to the base stock unit 37 and is a member configured to stock the cover containers 36b of the containers 36, and a plurality of the cover containers 36b are stacked with surfaces opposing the base containers 36a faced downward.

The carrying unit 23 includes a base unit 43, a slide rail 44 configured to support the base unit 43, and a cassette carrying unit 46 and a container carrying unit 47 slidably supported by the base unit 43.

The slide rail 44 extends along the widthwise direction (X-direction) of the casing 30 on the lower portion in the casing 30, and the base unit 43 is slidably supported on the slide rail 44. The base unit 43 includes a lower base 43a provided on the slide rail 44 and an upper base 43b extending in the height direction (Y-direction) of the casing 30 from an upper surface of the lower base 43a.

The container carrying unit 47 is provided on one side of the upper base 43b in terms of the widthwise direction (X-direction). The container carrying unit 47 is configured to carry the containers 36 (the base containers 36a and the cover containers 36b) from the container stock unit 22 to the container holding unit 25, and from the container holding unit 25 to the container storage 27, and is configured to be movable along the height direction (Y-direction) on the upper base 43b.

The cassette carrying unit 46 is provided on the other side of the upper base 43b in the widthwise direction (X-direction). The cassette carrying unit 46 is configured to carry the cassettes 1 from the cassette storage 21 to the cassette printing unit 24, and from the cassette printing unit 24 to the receiving recess 36c of the base container 36a set on the container holding unit 25, and is configured to be movable along the height direction (Y-direction) on the upper base 43b. Therefore, the carrying unit 23 is configured to be movable on the XY plane, so that the cassettes 1 and the containers 36 are allowed to be taken out and carried in the casing 30.

The cassette printing unit 24 is a member configured to print the above-described identification code C on the thin film layer 15 of the cassette 1 carried by the cassette carrying unit 46, and includes the laser marker, not shown. By irradiating the laser beam on the thin film layer 15 by the laser marker, the thin film layer 15 is decomposed along the laser beam. Accordingly, printing of the above-described identification code C on the thin film layer 15 is achieved.

The container holding unit 25 is a place where the cassettes 1 on which the data is printed by the cassette printing unit 24 are packed in the container 36, and is provided below the cassette storage 21. The base container 36a carried from the base stock unit 37 by the container carrying unit 47 is set on a placing surface 25a of the container holding unit 25. Then, the cassettes 1 on which the data is printed by the cassette printing unit 24 are carried into the receiving recess 36c of the base container 36a set on the container holding unit 25 in sequence by the cassette carrying unit 46. Then, when the receiving recess 36c is full, the cover container 36b is carried to the container holding unit 25 by the container carrying unit 47 and the base container 36a is closed. Accordingly, packing of the cassettes 1 into the container 36 is completed.

The container storage 27 is provided between the cassette storage 21 and the container stock unit 22, and includes storage trays 48 configured to hold the container 36 after having packed the cassettes 1. The storage trays 48 are arranged in a plurality of rows along the widthwise direction (X-direction) and the height direction (Y-direction) of the casing 30, and the containers 36 after having packed the cassettes 1 therein are carried from the container holding unit 25 to the storage trays 48 by the container carrying unit 47 one by one. Then, the personnel are able to take out the packed container 36 from the storage trays 48.

The dust catcher 26 is a member configured to collect dust of the decomposed thin film layer 15 when printing by the laser by the cassette printing unit 24, and includes a suction unit 60 provided on the lower portion of the casing 30 and a suction pipe 61 which communicates between the suction unit 60 and the cassette printing unit 24. One end of the suction pipe 61 is connected to the suction unit 60, and the other end extends upward from the suction unit 60 and is arranged to be exposed to the interior of the cassette printing unit 24. The suction unit 60 includes a suction pump connected to the suction pipe 61 and configured to suck the dust generated in the cassette printing unit 24 and a suction tank configured to collect the dust sucked by the suction pump (both not shown).

Referring back to Fig. 5, the control PC 81 is a member for determining the identification code C to be printed on the thin film layer 15 of the cassette 1 and, for example, is configured to input the above-described information on the embedded block B (test number, group number, animal number, gender, block number, etc.) as the identification code C and output the information to the communication unit 40 of the printing apparatus 20 as an ID signal. The control PC 81 is configured also to be able to select the kinds of the cassettes 1 (the color of the cassettes, the coarseness of the mesh portion, the size of the cassette) stored in the cassette storage 21 and outputs selected cassette information to the communication unit 40 as a cassette information signal in correspondence with the identification code C. In other words, the control PC 81 is configured to be able to output signals (ID information, cassette information) to the printing apparatus 20 so as to print the data on the predetermined kind of cassettes 1 in a predetermined order.

As described above, the printing apparatus 20 includes the control unit 41 configured to generally control the cassette printing unit 24 and the carrying unit 23 and the communication unit 40 configured to communicate with the control PC 81.

The communication unit 40 serves as a boundary between the control PC 81 and the printing apparatus 20, and is configured to receive the ID signals and the cassette information signals outputted from the control PC 81 and output the same to the control unit 41.

The control unit 41 is a member configured to output the ID signal sent from the control PC 81 via the communication unit 40 to the cassette printing unit 24 and the cassette information signals to the carrying unit 23, and the cassette printing unit 24 and the carrying unit 23 are operated according to these output signals.

### (Method of Printing Data on Cassettes)

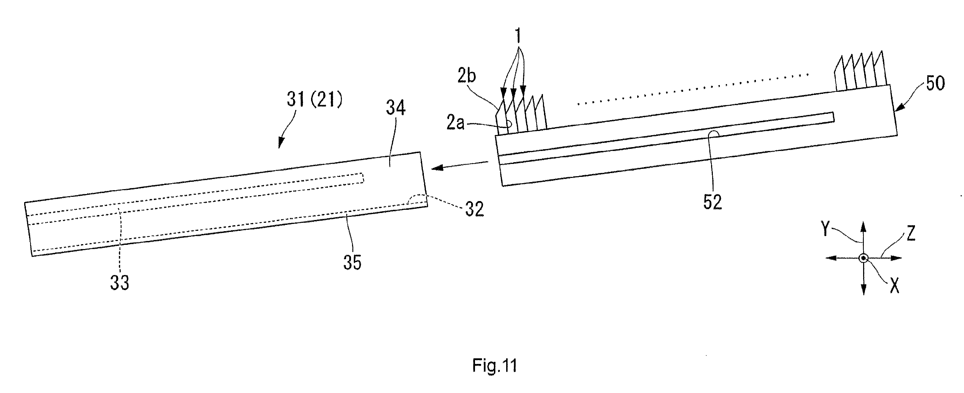

Subsequently, the method of printing the data on the cassette by the above-described printing apparatus (printing unit) will be described. Fig. 11 is a schematic configuration drawing (side view) of the cassette pack and the storage rack and is an explanatory drawing showing a method of setting the cassette pack.

As shown in Fig. 11, the cassette pack 50, in which the cassettes 1 before having the data printed thereon are packed, is set in the storage rack 31 of the cassette storage 21. More specifically, the cassette pack 50 is inserted from the inlet port side to the outlet port side of the storage rack 31 in a state in which the longitudinal direction (Z-direction) of the storage rack 31 matches the longitudinal direction of the cassette pack 50. At this time, the cassette pack 50 is inserted from the one end side in terms of the longitudinal direction, and is further inserted with the rails 33 formed on the storage rack 31 engaged with the grooves 52 formed on the cassette pack 50 from the end surface on the one end side thereof. Then, the cassette pack 50 is guided by the rails 33 and is inserted to the outlet port side of the storage rack 31, so that the setting of the cassette pack 50 is completed. As regards other storage racks 31, the cassette packs 50 are set in sequence in the same method as described above. At this time, a plurality of kinds of the cassette packs, in which the cassettes 1 which are different in color, size, or coarseness of the mesh portion depending on the test content or the application are packed, are set.

When setting the cassette packs 50 in the storage racks 31, the cassette packs 50 are inserted into the storage racks 31 from the one end sides thereof as described above. If the cassette pack 50 is inserted in the wrong direction, the cassette pack 50 is inserted in a state in which the orientation of the cassettes 1 is different, so that the following printing operation might not be done correctly.

Accordingly, in this embodiment, as described above, the grooves 52 are opened at the one end of the cassette pack 50 in terms of the longitudinal direction, and the grooves 52 are not formed on the other end surface on the other end side thereof. Therefore, when an attempt is made to insert the cassette pack 50 from the other end side, the end surface on the other end side of the cassette pack 50 comes into contact with the end surfaces of the rails 33 of the storage rack 31, so that the cassette pack 50 cannot be inserted. Accordingly, erroneous insertion of the cassette pack 50 is prevented, and the cassettes 1 are taken out in a normal orientation by the cassette carrying unit 46, whereby the correct printing of data on the cassette 1 is achieved.

Subsequently, as shown in Figs. 5 and 6, the kinds of the cassettes 1 set in the storage racks 31 and the positions of the storage racks 31 to the control PC 81 are inputted in one-to-one correspondence, and the identification codes C to be printed on the cassettes 1 and the kinds of the cassettes 1 to be selected for the printing operation are inputted into the control PC 81 in one-to-one correspondence. More specifically, the kind (the color, size of the cassette 1, or the coarseness of the mesh portion 3) of the cassettes 1 on which the data is to be printed is selected and the information (test number, group number, animal number, gender, block number, etc.) on the embedded block B to be prepared are inputted. Then, after having inputted the information on the kind of the cassette 1 and the embedded block B to be prepared, such information is outputted toward the printing apparatus 20 as the cassette information signal and the ID signal.

The cassette information signal and the ID signal outputted from the control PC 81 are inputted to the control unit 41 via the communication unit 40 of the printing apparatus 20. Then, the control unit 41 outputs the ID information signal toward the cassette printing unit 24, and the cassette information signal is outputted toward the carrying unit 23 (the cassette carrying unit 46 and the container carrying unit 47).

Then, upon reception of the cassette information signal, the container carrying unit 47 goes to the container stock unit 22 on the basis of this signal to take the container 36. More specifically, the container carrying unit 47 moves to the base stock unit 37 of the container stock unit 22, takes out the base container 36a, and brings the same to the container holding unit 25. Then, after having carried the base container 36a to the container holding unit 25, the base container 36a is placed on the placing surface 25a of the container holding unit 25 in a state in which the receiving recess 36c of the base container 36a is faced upward.

Then, upon reception of the cassette information signal, the cassette carrying unit 46 selects the cassettes 1 of a predetermined kind from the cassettes 1 set in the respective storage racks 31 on the basis of the signals, and takes out the selected cassettes 1 from the storage rack 31. More specifically, the cassette carrying unit 46 moves to the position of the storage rack 31 where the predetermined cassettes 1 are set, and takes one of the cassettes 1 from the outlet port of the storage rack 31.

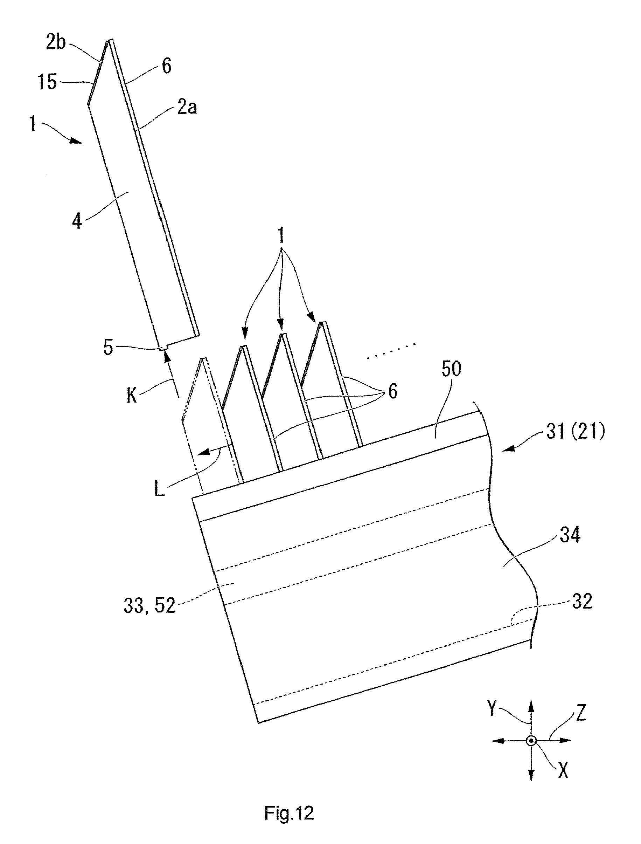

Here, Fig. 12 is an enlarged drawing of the storage rack and is an explanatory drawing showing the time of taking out the cassette.

As shown in Fig. 12, when the cassette carrying unit (see Fig. 6) moves to the position of the predetermined storage rack 31, it takes out the frontmost (the one end side of the cassette pack 50) cassette 1 by pulling obliquely upward from the cassettes 1 arranged in the cassette pack 50 (see arrow K in Fig. 12).

Since the storage rack 31 in this embodiment is inclined downward from the inlet port to the outlet port, a load corresponding to the weight of the cassettes 1 acts on the respective cassettes 1 arranged in the cassette pack 50 from the rear side toward the front side. Therefore, even when an attempt is made to pull out only the frontmost cassette 1 from the cassettes 1 arranged in the cassette pack 50, there is a possibility to drag out the cassette 1 overlapped thereon together. In this case, the cassette 1 dragged out has a risk of dropping from the storage rack 31.

Therefore, in this embodiment, the cassettes 1 arranged in the cassette pack 50 are arranged in a state of being in contact with the adjacent cassette 1 via the rails 6 formed on the bottom surface 2a of the cassette 1, so that the adjacent cassettes 1 are in line contact with each other. In other words, the contact surface area is set to be smaller than the case of a configuration in which the adjacent cassettes 1 are in surface contact with each other between the bottom surface 2a and the upper surface. Accordingly, a frictional force between the adjacent cassettes 1 is smaller than the case where the cassettes 1 are in surface contact with each other, and the cassette 1 is prevented from jumping out from the cassette pack 50 by being dragged by the adjacent cassette 1 when the cassette 1 is taken out, so that only the predetermined single cassette is pulled out. Subsequently, the cassettes 1 arranged in the cassette pack 50 slip forward in the cassette pack 50 in a state of keeping the parallel state with each other (see arrow L in Fig. 12).

Referring now back to Figs. 5 and 6, the cassette 1 pulled out from the storage rack 31 is carried to the cassette printing unit 24, and the printing of the data on the cassette 1 is performed by the cassette printing unit 24. More specifically, the cassette printing unit 24 irradiates the thin film layer 15 with the laser marker on the basis of the ID information signal outputted from the control unit 41. Then, the thin film layer 15 is decomposed along the laser beam irradiated from the laser marker, whereby the predetermined identification code C according to the ID information signal is printed on the thin film layer 15. When the printing of the data on the cassette 1 is performed by the cassette printing unit 24, the suction pump of the dust catcher 26 is operated. Accordingly, since the dust decomposed from the thin film layer 15 is collected via the suction pipe, accumulation of the dust in the cassette printing unit 24 or in the casing 30 is avoided. Consequently, the casing 30 is kept clean and hence maintenance is facilitated.

Subsequently, the cassette 1 on which the data is printed is carried to the container holding unit 25 by the cassette carrying unit 46, and is arranged in the receiving recess 36c of the base container 36a set in the container holding unit 25.

Then, after having carried the cassette 1 into the base container 36a, the above-described procedure is repeated, so that the cassettes 1 on which the data is printed are arranged in sequence in the receiving recess 36c of the base container 36a set in the container holding unit 25. At this time, in this embodiment, predetermined kind of the cassettes 1 are taken out from the storage rack 31 in a predetermined order on the basis of the cassette information inputted to the cassette carrying unit 46, and data is printed on the predetermined cassettes 1 taken out from the storage rack 31 in a predetermined order, for example, by test animal, by internal organ, or by test on the basis of the ID information signal inputted to the control unit 41. In other words, the cassette carrying unit 46 takes out the predetermined cassettes 1 in a predetermined order and carries the same to the cassette printing unit 24, so that the identification codes C are printed on the carried cassettes 1 in a predetermined order. Subsequently, the cassettes 1 on which the data is printed are arranged in the receiving recess 36c of the base container 36a placed on the container holding unit 25 in sequence, so that the cassettes 1 arranged in the receiving recess 36c are arranged in a state of being sorted by predetermined test animal, by internal organ, or by test.

Subsequently, when the interior of the receiving recess 36c of the base container 36a is filled with the cassettes 1 on which the data is printed, the base container 36a is closed with the cover container 36b. More specifically, the container carrying unit 47 moves to the cover stock unit 38, takes out the cover container 36b of the container 36 stocked in the cover stock unit 38, and carries the same to the container holding unit 25. Then, after having carried the cover container 36b to the container holding unit 25, the cover container 36b is set to close the receiving recess 36c of the base container 36a. Accordingly, a state in which the cassettes 1 arranged in the order of the identification codes C are packed in the container 36 is achieved.

Then, the container 36 having packed the cassettes 1 completely is carried to the container storage 27. More specifically, the container 36 placed on the placing surface 25a of the container holding unit 25 is carried toward the container storage 27 by the container carrying unit 47, and is stored in the storage trays 48 of the container storage 27.

By repeating the above-described processes, the cassettes 1 packed in the order of the identification codes C are stored in the storage trays 48 in sequence, which allows the personnel to take out the packed cassettes 1 from the storage trays 48. Accordingly, the procedure may go to the following embedded block B preparation process or the like smoothly.

In this manner, in the embodiment described above, the configuration in which the cassette carrying unit 46 is controlled to take out the predetermined cassettes 1 in the predetermined order from the cassette storage 21, carry the same to the cassette printing unit 24, and then carry the cassettes 1 on which the data is printed to the base container 36a set in the container holding unit 25 is provided.

In this configuration, the printing of the data is performed on the predetermined cassettes 1 in the predetermined order on the basis of the ID information signal inputted to the control unit 41, and the cassettes 1 on which the data is printed are arranged in the receiving recess 36c of the base container 36a in sequence, so that the cassettes 1 to be arranged in the receiving recess 36c are arranged in a state of being sorted by predetermined test animal, by internal organ, or by test automatically. In other words, after having printed the data automatically by the predetermined classification according to the correspondence between the kind of the cassette 1 and the identification code C on the basis of the ID information and the cassette information which are inputted in advance, the cassettes on which the data is printed are stored in the container as is. Therefore, being different from the configuration in which the cassettes on which the data is printed are simply discharged from the discharge port one by one as in the related art, it is not necessary to arrange the cassettes on which the data is printed manually.

Accordingly, the operation efficiency is significantly improved and the burden on the personnel is alleviated in comparison with the case in which the personnel identify the identification codes C printed on the cassettes and sort the cassette as in the related art. In addition, there is no risk of erroneous sorting of the cassette 1 when arranging the cassettes 1 on which the data is printed in the base container 36a.

Therefore, since packing of the cassettes 1 in a state of being sorted in the container 36 by a predetermined classification is achieved, the procedure may go to the following embedded block B preparation process or the like smoothly and the accurate quality control of the embedded block B to be fixed to the cassette 1 is achieved.

In this embodiment, the container carrying unit 47 supplies the container 36 (the base container 36a and the cover container 36b) from the container stock unit 22 to the container holding unit 25, and also the container 36 is automatically supplied and carried by carrying the container 36 from the container holding unit 25 to the container storage 27 after having completed the storage of the cassettes 1 to the base container 36a.

In this manner, in the printing apparatus 20 of this embodiment, the operation from the printing of data on the cassettes 1, the supplying and carrying of the container 36 to the packaging of the cassettes 1 is performed in block in the casing 30. Accordingly, the operation efficiency is further improved, and the burden of the personnel is alleviated. In addition, there is no risk of erroneous sorting of the cassette 1 when arranging the cassettes 1 on which the data is printed in the base container 36a.

In this embodiment, the configuration in which the identification code C is printed on the thin film layer 15 of the cassette 1 by the laser marker installed on the cassette printing unit 24 is provided.

In this configuration, since the identification code C is engraved by graving the thin film layer 15 using the laser beam, being different from the contact printing process in the related art, the provability of printing failure is extremely low. Also, there is no possibility of separation of the identification code C by friction or the like during the operation of preparing the embedded block B. Therefore, the quality control of the embedded block B is performed always accurately.

Since the identification code C is printed using the laser beam, the printing speed is high, and hence the printing operation is achieved in a short time. Therefore, improvement of the operating efficiency is achieved. Since the identification code C is engraved in a non-contact operation, the display of the identification code C is achieved without being affected by the coarseness of the surface of the thin film layer 15. In addition, even though the surface to be printed does not match precisely with the print head surface of the laser marker, the printing failure does not occur. Therefore, the thin film layer 15 is formed on the inclined surface 2b without paying specific attention.

The technical scope of the invention is not limited to the embodiments shown above, and various modifications may be made without departing the scope of the invention.

For example, although the inclined surface 2b is formed at the position where the thin film layer 15 is arranged in this embodiment, the invention is not limited thereto, and the inclined surface 2b does not have to be formed as long as the thin film layer 15 is formed on the surface of the cassette 1, and any position will do.

In addition, although the thin film layer 15 is provided on the cassette 1 and the identification code C is displayed by decomposing the thin film layer 15 with the laser beam in the above-described embodiment, the thin film layer 15 may be eliminated. Also, although the configuration in which the laser marker is installed on the cassette printing unit 24 and the printing is achieved by the laser beam irradiated from the laser marker has been described, a configuration in which the printing of data is performed by a method other than the method using the laser marker may be used.

As another example, rails may be formed on the cassette pack and grooves on the cassette storage.

## Claims

1. An embedding cassette printing apparatus (20) configured to print an identification code (C) of a biological sample (S) on a printing surface of an embedding cassette (1) used as a placing bed of an embedded block (B) formed by embedding the biological sample applied with paraffin substitution process in an embedding material (P) comprising:
a cassette storage unit (21) configured to store a plurality of the embedding cassettes by kind;
a cassette printing unit (24) configured to print data on the printing surfaces of the embedding cassettes;
a container holding unit (25) configured to set a container (36) configured to receive the embedding cassettes on which the data is printed;
a cassette carrying unit (46) configured to carry the embedding cassettes from the cassette storage to the cassette printing unit and from the cassette printing unit to the container set in the container holding unit; and
a control unit (41) configured to control an action of the cassette carrying unit,
wherein the control unit is adapted to take out the embedding cassettes of a predetermined kind from the cassette storage in a predetermined order and carry the same to the cassette printing unit, and control the cassette carrying unit so as to carry the embedding cassettes on which the data is printed to the container set in the container holding unit.

2. The embedding cassette printing apparatus according to Claim 1, wherein the embedding cassette printing apparatus according to the invention includes:
a container stock unit (22) configured to stock the containers to be set in the container holding unit;
a container storage (27) configured to store the container in which the embedding cassettes on which the data is printed are received; and
a container carrying unit (47) configured to carry the container stocked in the container stock unit to the container holding unit and carry the container in which the embedding cassettes are stored to the container storage.

3. The embedding cassette printing apparatus according to Claim 1 or 2, wherein the cassette printing unit includes a laser marker apparatus, and is configured to print the data on the printing surface of the embedding cassette by a laser beam irradiated from the laser marker apparatus.

4. The embedding cassette printing apparatus according to any one of Claims 1 to 3, wherein a cassette pack (50) in which the embedding cassettes before the data is printed thereon are arranged by kind by a predetermined number is inserted into the cassette storage,
grooves (52) are formed on surfaces of the cassette pack along the direction of insertion into the cassette storage, while rails (33) configured to engage the grooves for guiding the cassette pack into the cassette storage are formed on the cassette storage, and
the grooves are formed from one end of the cassette pack to a midsection along the direction of insertion of the cassette storage.

5. The embedding cassette printing apparatus according to any one of the preceding claims, wherein the cassette storage is inclined downward from the inlet side where the cassette pack is inserted to the outlet side where the embedding cassettes are taken out by the cassette carrying unit.

6. The embedding cassette printing apparatus according to any one of the preceding claims, wherein the embedding cassettes are arranged in the cassette pack in a state of being aligned along the direction of insertion thereof into the cassette storage, and a projection (6) for reducing a contact surface area with the adjacent embedding cassette is formed on the back surface side of the each embedding cassette.
